# EUROPEAN PATENT APPLICATION

(11) **EP 0 959 165 A1**
(43) Date of publication of application: **24.11.1999**
(21) Application number: 98957116.1
(22) Date of filing: 02.12.1998
(51) Int. Cl.: D04H 3/00, B32B 27/32, A61F 13/15

(54) **FLEXIBLE LAMINATE OF NONWOVEN FABRICS**

(30) Priority: 04.12.1997 JP 33417297
(71) Applicant: Mitsui Chemicals, Inc., Tokyo 100-6070 (JP)
(72) Inventor: HISADA, Minoru, Yokkaichi-shi, Mie 512-8054 (JP); MOTOMURA, Shigeyuki, Yokkaichi-shi, Mie 512-8054 (JP); ISHII, Hiroshi, Ichihara-shi, Chiba-Ken (JP); TAKESUE, Kunihiko, Yokkaichi-shi, Mie 512-8054 (JP)
(74) Representative: HOFFMANN - EITLE
(86) International application number: JP9805415
(87) International publication number: WO9928544

(57) **Abstract**

A soft nonwoven fabric laminate having a spunbonded nonwoven fabric layer and a meltblown nonwoven fabric layer, with the spunbonded nonwoven fabric comprising a conjugate fiber made up of a propylene-ethylene random copolymer (a) and an ethylene-based polymer (b) and the meltblown nonwoven fabric comprising a particular polymer containing ethylene units. The conjugate fiber is preferably a concentric or eccentric core-sheath type or side-by-side type conjugate fiber whose surface is made up of at least the component (b). Because of this, a nonwoven fabric laminate can be obtained that has good formation and excellent softness, gas permeability and water impermeability. It is used suitably for sanitary goods such as disposable diapers and packaging materials.

## Description

### TECHNICAL FIELD

The present invention relates to a soft nonwoven fabric laminate. Specifically, it relates to a soft nonwoven fabric laminate having good formation, excellent softness, gas permeability and water impermeability which is fit for use as a material for sanitary goods such as disposable diapers and a packaging material.

### TECHNICAL BACKGROUND

In recent years, nonwoven fabrics are used for a wide variety of applications because of their excellent gas permeability and solftness and are finding an increasing number of applications. Against this background, nonwoven fabrics are being called on to have varied properties meeting the requirements of individual applications and to have improved properties.

In the meantime, spunbonded nonwoven fabrics have been used as the surface materials of absorptive goods such as disposable diapers because they do not have napping and yet show excellent resistance to loose fibers. However, spunbonded nonwoven fabrics do not generally have good formation and therefore are called on to have improved uniformity. As a method for improving the uniformity of spunbonded nonwoven fabrics, the method in which a meltblown nonwoven fabric is laminated to a spunbonded nonwoven fabric is known. However, such laminate is generally inferior in softness.

Therefore, the present invention was made against the background as described above and is intended to provide a soft nonwoven fabric laminate having good formation and excellent softness, gas permeability and water impermeability.

### DISCLOSURE OF THE INVENTION

The inventors of the present invention made a study in the circumstance as described above and consequently have come to complete the present invention after finding that the use of a spunbonded nonwoven fabric comprising a particular composite fabric as the spunbonded nonwoven fabric and a meltblown nonwoven fabric comprising a particular polyolefin as the meltblown nonwoven fabric makes it possible to obtain a laminate having good formation and excellent softness, gas permeability and water impermeability.

The soft nonwoven fabric laminate is a laminate which comprises at least one spunbonded nonwoven fabric layer and at least one meltblown nonwoven fabric layer and one surface or both surfaces of which are a spunbonded nonwoven fabric layer; with the aforesaid spunbonded nonwoven fabric comprising a conjugate fiber:
which comprises:
(A) A propylene-ethylene random copolymer (a) having the physical properties as described in (1) and (2) below:
   (1) The ethylene content is not more than 5 mol%;
   (2) Mw/Mn is 2 to 4;
(B) An ethylene-based polymer (b) having the physical properties as described in (3) and (4) below and forming at least part of the fiber surface:
   (3) The density is 0.87 to 0.98 g/cm³;
   (4) Mw/Mn is 1.5 to 4; and
      in which the ratio by weight between (a) and (b) ((a)/(b)) is 5/95 to 70/30; and
   with the aforesaid meltblown nonwoven fabric comprising one type of resin selected from among:
   (i) An ethylene homopolymer;
   (ii) A propylene-ethylene random copolymer whose ethylene content is in the range of 0.5 to 10 mol%;
   (iii) A composition containing not less than 2 wt% but less than 100 wt% of an ethylene homopolymer and not more than 98 wt% of a propylene-based polymer.

Under the present invention, there are the following types of conjugate fibers forming the aforesaid spunbonded nonwoven fabric: (1) a concentric core-sheath type conjugate fiber made up of the core part comprising the propylene-ethylene random copolymer (a) and the sheath part comprising the ethylene-based polymer (b), (2) an eccentric core-sheath type conjugate fiber made up of the core part comprising the propylene-ethylene random copolymer (a) and the sheath part comprising the ethylene-based polymer (b), and (3) a side-by-side type (bimetal type) conjugate fiber made up of the propylene-ethylene random copolymer (a) and the ethylene-based polymer (b).

Under the present invention, the aforesaid spunbonded nonwoven fabric layer and the aforesaid meltblown nonwoven fabric layer are preferably bonded by heat embossing processing. In this case, the bonded area of the spunbonded nonwoven fabric layer and the meltblown nonwoven fabric layer is preferably 5% to 35% of the area of contact between the spunbonded nonwoven fabric layer and the meltblown nonwoven fabric layer.

The soft nonwoven fabric laminate of the present invention has preferably the KOSHI value of not more than 10.5, and the peel strength between the spunbonded nonwoven fabric layer and the meltblown nonwoven fabric layer is preferably not less than 15 g/5 cm.

Further, the present invention provides a soft nonwoven fabric laminate suitable especially for use in materials for sanitary goods and packaging materials.

### BRIEF EXPLANATION OF THE DRAWINGS

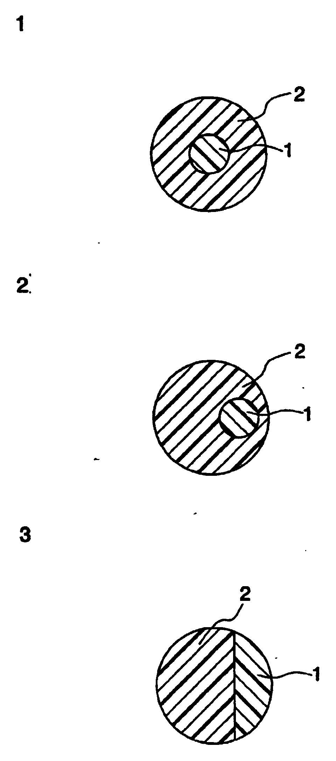

Fig. 1 shows a representative sectional view of the concentric core-sheath conjugate fiber. Fig. 2 shows a representative sectional view of the eccentric core-sheath conjugate fiber, and Fig. 3 shows a representative view of the side-by-side type conjugate fiber.

### BEST EMBODIMENT OF THE INVENTION

Next is given a specific explanation of the soft nonwoven fabric laminate of the present invention.

The soft nonwoven fabric laminate is a laminate which comprises at least one spunbonded nonwoven fabric layer and at least one meltblown nonwoven fabric layer and one surface or both surfaces of which are a spunbonded nonwoven fabric layer.

The spunbonded nonwoven fabric comprising the soft nonwoven fabric laminate of the present invention is made up of a conjugate fiber which comprises the propylene-ethylene random copolymer (a) and the ethylene-based polymer (b) and in which the ratio by weight between (a) and (b) ((a)/(b)) is in the range of 5/95 to 70/30, preferably 5/95 to 50/50, more preferably 10/90 to 40/60, much more preferably 10/90 to 20/80. If the ratio of the propylene-ethylene random copolymer (a) in the conjugate fiber is less than 5/95 in terms of ((a)/(b)), the strength of the conjugate fiber may be inadequate in some cases; and if the ratio of the propylene-ethylene random copolymer (a) in the conjugate fiber is more than 70/30 in terms of ((a)/(b)), the conjugate fiber may show poor softness in some cases.

There are the following types of the aforesaid conjugate fibers: (1) a concentric core-sheath type conjugate fiber made up of the core part comprising the propylene-ethylene random copolymer (a) and the sheath part comprising the ethylene-based polymer (b), (2) an eccentric core-sheath type conjugate fiber made up of the core part comprising the propylene-ethylene random copolymer (a) and the sheath part comprising the ethylene-based polymer (b), and (3) a side-by-side type conjugate fiber made up of the propylene-ethylene random copolymer (a) and the ethylene-based polymer (b). Further, out of these conjugate fibers, the eccentric core-sheath type conjugate fiber of (2) above and the side-by-side type conjugate fiber of (3) above become crimped fibers and are preferable with respect to softness.

Fig. 1 shows a representative sectional view of a conjugate fiber. Fig. 1 shows a representative sectional view of the concentric core-sheath conjugate fiber. Fig. 2 shows a representative sectional view of the eccentric core-sheath conjugate fiber, and Fig. 3 shows a representative view of the side-by-side type conjugate fiber. In Figs. 1 through 3, 1 represents the part made up of the propylene-ethylene random copolymer (a), 2 represents the part made up of the ethylene-based polymer (b).

The propylene-ethylene random copolymer (a) forming the conjugate fiber has the ethylene content of not more than 5 mol%, and an embodiment of the propylene-ethylene random copolymer (a) preferable from the viewpoint of spinnability has the ethylene content in the range of preferably 0.3 to 5 mol%, more preferably 0.5 to 5 mol%, and much more preferably 0.5 to 4 mol%, and the melt flow rate (MFR, as determined at a load of 2.16 kg and at 230°C in accordance with ASTM D1238) in the range of preferably 20 to 100 g/10 minutes, more preferably 30 to 70 g/10 minutes. Furthermore, the Mw/Mn (Mw: weight-average molecular weight; Mn: number-average molecular weight) is preferably from the viewpoint of spinnability in the range of 2 to 4. Further, the Mw/Mn may be determined by the method already known to the public using the gel permeation chromatography. The term spinnability as herein used means the resin's property of being capable of being spun stably without involving the breakage of the filament when the melted resin is spun from the spinneret.

Examples of the ethylene-based polymer (b) forming the conjugate fiber include homopolymer of ethylene (manufactured by either low-pressure or high-pressure process) and random copolymers of ethylene with α-olefins such as propylene, 1-butene, 1-hexene, 4-methyl-1-pentene and 1-octene. These ethylene-based polymers (b) has preferably from the viewpoint of spinnability density in the range of 0.87 to 0.98 g/cm³, preferably 0.880 to 0.970 g/cm³, more preferably 0.900 to 0.950 g/cm³. Furthermore, their MFR (as determined at a load of 2.16 kg and at 190°C in accordance with ASTM D1238) is preferably from the viewpoint of spinnability in the range of preferably 20 to 70 g/10 minutes, more preferably 20 to 60 g/10 minutes, and the Mw/Mn is preferably from the viewpoint of spinnability in the range of 1.5 to 4, preferably 2 to 4.

As the ethylene-based polymer (b), an ethylene homopolymer whose density, MFR and Mw/Mn are in the aforesaid ranges is preferable from the viewpoint of the solftness and spinnability of the nonwoven fabric obtained.

The nonwoven fabric comprising the aforesaid conjugate fiber shows better softness than the conventional nonwoven fabrics comprising polypropylene resin because most or all of the conjugate fiber surfaces forming the aforesaid nonwoven fabric is made up of the ethylene-based polymer (b). Furthermore, if the conjugate fiber forming the nonwoven fabric is crimped fiber, the nonwoven fabric shows much better softness.

Under the present invention, a slip agent such as oleic amide, erucic amide and stearic amide may be added in a ratio of 0.1 to 0.5 wt% to the aforesaid ethylene-based polymer (b). The addition of a slip agent to the ethylene-based polymer improves the loose-fiber resistance of the resulting spunbonded nonwoven fabric. Moreover, under the present invention, a slip agent may be added to the propylene-ethylene random copolymer (a).

Furthermore, under the present invention, other polymers, coloring agents, heat stabilizers, nucleating agents, etc. may be added to the propylene-ethylene random copolymer (a) and/or the ethylene-based polymer (b) as required to the extent that the purpose of the present invention is not thwarted.

The method already known to the public may be used for the method for manufacturing the spunbonded nonwoven fabric comprising the conjugate fiber. Under such method, for example, the ratio by weight between propylene-ethylene random copolymer (a) and ethylene-based polymer (b) is set at 5/95 to 70/30, conjugate fiber filaments are spun by the two-extruder melting and spinning method, the filaments thus spun are cooled with a cooling fluid, and then the filaments are given tension by means of stretching air so that the filaments become a desired fineness. Thereafter, the spun filaments are collected on a collection belt and subjected to the processing of tangling so that the spunbonded nonwoven fabric is obtained. Examples of the tangling processing method include, for example, a method in which the fibers are fused by the processing of heat embossing, a method in which the fibers are fused by supersonic waves, a method in which the fibers are entangled by using a water jet, a method in which the fibers are fused by passing hot air through them, and a method in which the fibers are entangled by using a needle punch. Out of these entangling methods, the process of heat embossing is preferable. The diameter of the fiber forming this spunbonded nonwoven fabric is normally approximately 5 to 30 µm, preferably approximately 10 to 20 µm.

The fiber forming the meltblown nonwoven fabric used in the present invention comprises the polyolefins as described in (i) to (iii) below.
(i) Ethylene homopolymer (manufactured by either low-pressure or high-pressure process): This ethylene homopolymer (i) has the MFR (as determined at a load of 2.16 kg and at 190°C in accordance with ASTM D1238) in the range of preferably 20 to 60 g/10 minutes, the density in the range of preferably 0.88 to 0.97 g/cm³, and the Mw/Mn in the range of preferably 1.5 to 4.
(ii) Propylene-ethylene random copolymer having an ethylene content of 0.5 to 10 mol%: This propylene-ethylene random copolymer (ii) has an ethylene content of 0.5 to 10 mol%, preferably 0.5 to 5 mol%, the MFR (as determined at a load of 2.16 kg and at 230°C in accordance with ASTM D1238) in the range of preferably 200 to 1,000 g/10 minutes, and the Mw/Mn in the range of preferably 2 to 4.
(iii) A composition comprising an ethylene homopolymer and a propylene-based polymer which has an ethylene homopolymer content of not less than 2 wt% but less than 100 wt% and a propylene-based polymer content of not more than 98 wt%.

As an example of an ethylene homopolymer forming this composition (iii), the same ethylene homopolymer as described in (i) above may be cited. Further, as examples of the propylene-based polymer forming this composition (iii), propylene homopolymer and random copolymers of propylene with α-olefins such as ethylene, 1-butene, 1-hexene and 4-methyl-1-pentene may be cited. The propylene-based polymer has the MFR (as determined at a load of 2.16 kg and at 230°C in accordance with ASTM D1238) in the range of preferably 200 to 1,000 g/10 minutes, and the Mw/Mn in the range of preferably 2 to 4. As the propylene-based polymer, propylene homopolymer is preferable.

The use of a meltblown nonwoven fabric formed from the fiber comprising the polyolefins as described above makes it possible to obtain a laminate with excellent peel strength when the meltblown nonwoven fabric is bonded with a spunbonded nonwoven fabric by the processing of heat embossing.

Methods already known to the public may be used for the method for manufacturing the meltblown nonwoven fabric used in the present invention. For example, the meltblown nonwoven fabric may be manufactured by melting and extruding the aforesaid polyolefin, blow-spinning the fiber spun through the meltblown fiber spinneret as a flow of fine fiber by means of a high-temperature/high-velocity fluid to form a fine fiber web on the collection device, and subjecting it to the processing of heat fusion as required. The average diameter of the fiber forming this meltblown nonwoven fabric is normally approximately 1 to 30 µm, preferably approximately 2 to 10 µm.

The soft nonwoven fabric laminate of the present invention comprises at least one spunbonded nonwoven fabric layer and at least one meltblown nonwoven fabric layer. The layer structure is not restricted in any particular way so long as at least one of the surface layers is made up of a spunbonded nonwoven fabric layer, but a preferable layer structure is a spunbonded nonwoven fabric layer/a meltblown nonwoven fabric layer and a spunbonded nonwoven fabric layer/a meltblown nonwoven fabric layer/a spunbonded nonwoven fabric layer.

The basis weights of the spunbonded nonwoven fabric and meltblown nonwoven fabric of the soft nonwoven fabric laminate of the present invention may be selected as appropriate to meet the requirements of the particular applications of the soft nonwoven fabric laminate and the quality, economics, etc. required thereof. The basis weight of the laminate is normally approximately 5 to 100 g/m², preferably approximately 10 to 50 g/m², more preferably approximately 12 to 30 g/m².

Any method may be used for the method for manufacturing the soft nonwoven fabric laminate of the present invention, and there is no particular limit to the method so long as it is capable of forming the laminate by laminating the spunbonded nonwoven fabric and the meltblown nonwoven fabric to form into one laminate. Examples of the aforesaid method for manufacturing the soft nonwoven fabric laminate include (1) a method in which the spunbonded nonwoven fabric and the meltblown nonwoven fabric are thermally bonded after the meltblown nonwoven fabric is formed by depositing the fabric formed by the meltblown method directly on the spunbonded nonwoven fabric, (2) a method in which the spunbonded nonwoven fabric and the meltblown nonwoven fabric are put on top of each other and bonded by heating them under pressure, and (3) a method in which the spunbonded nonwoven fabric and the meltblown nonwoven fabric are bonded by use of an adhesive such as a hot melt adhesive and a solvent-based adhesive.

The method in which the meltblown nonwoven fabric is formed directly on the spunbonded nonwoven fabric may be accomplished by the meltblown method in which a melted material of a thermoplastic polyolefin is blown into a flow of fine fiber from the meltblown spinneret onto the surface of the spunbonded nonwoven fabric before the flow of fine fiber solidifies completely, so that fine fiber may be deposited on the surface of the spunbonded nonwoven fabric. At this time, while the reverse surface of the surface of the spunbonded nonwoven fabric onto which the fine fiber formed by the meltblown method is blown is placed under negative pressure, the fine fiber is blown and deposited onto the spunbonded nonwoven fabric placed on the collection surface of a mesh belt, for example, and at the same time, the spunbonded nonwoven fabric and the meltblown nonwoven fabric are combined into one so that a soft nonwoven fabric laminate having the spunbonded nonwoven fabric and the meltblown nonwoven fabric is obtained. If these two nonwoven fabrics are not combined into one in an inadequate manner, they may be combined into one adequately by means of heated embossing press rolls, for example.

For the method for bonding the spunbonded nonwoven fabric and the meltblown nonwoven fabric by heat fusion, the method in which the whole of the contact surfaces of the spunbonded nonwoven fabric and the meltblown nonwoven fabric are bonded by heat and a method in which part of the contact surfaces of the spunbonded nonwoven fabric and the meltblown nonwoven fabric are bonded by heat may be used. Under the present invention, a method in which part of the contact surfaces of the spunbonded nonwoven fabric and the meltblown nonwoven fabric are bonded by the heat embossing method is preferable. In this case, the bonded area (that is, the area impressed by the embossing roll) is 5% to 35%, preferably 10% to 30%, of the contact surface of the spunbonded nonwoven fabric and the meltblown nonwoven fabric. If the bonded area is within the aforesaid range, the soft nonwoven fabric laminate, having a good balance between peel strength and softness, is excellent.

Examples of the hot melt adhesive used in the method in which the spunbonded nonwoven fabric and the meltblown nonwoven fabric are bonded by use of an adhesive include, for example, adhesives based on resins such as vinyl acetate and polyvinyl alcohol and adhesives based on rubbers such as styrene-butadiene and styrene-isoprene. Further, examples of the solvent-based adhesive used in the present invention include, for example, adhesives which are based on rubbers such as styrene-butadiene, styrene-isoprene and urethane, and organic solvents and water-based emulsions which are based on resins such as vinyl acetate and vinyl chloride. Out of these adhesives, hot melt adhesives based on rubbers such as styrene-isoprene and styrene-butadiene are preferable in that they do not impair the characteristic hand of the spunbonded nonwoven fabric.

The soft nonwoven fabric laminate of the present invention obtained by the method as described above has good formation and excellent gas permeability, water impermeability and softness. This soft nonwoven fabric laminate also has wear resistance because the surface of one or both sides of the laminate is formed of the spunbonded nonwoven fabric.

The KOSHI value, an index of softness, of the soft nonwoven fabric laminate of the present invention is normally not more than 10.5, preferably less than 10, more preferably not more than 9, and the peel strength between the spunbonded nonwoven fabric and the meltblown nonwoven fabric is normally not less than 15 g/5 cm, preferably not less than 40 g/5 cm.

The soft nonwoven fabric laminate of the present invention is applied to a wide variety of sanitary goods, household materials, industrial materials and medical materials. Especially of its excellent softness, gas permeability and water impermeability, the soft nonwoven fabric laminate of the present invention is used suitably for a material for sanitary and packaging materials and applied to substrates of disposable diapers, sanitary napkins, poultice materials, etc. and bed covers as a material for sanitary goods , and to compact disc bags, food packaging materials, clothing covers, etc. as a material for packaging materials.

### EXPERIMENT EXAMPLES

In the following Experiment Examples is given a specific explanation of the present invention. However, it is to be understood that the present invention is not be limited in any way by these Experiment Examples.

Further, the determination of the KOSHI value, peel strength, etc. in the Experiment Examples was made by the following methods:
(1) Determination of the KOSHI Value
   The tensile, shear strength, compression, surface and bending tests were conducted by use the KES-FB system available from Kato Tech Co., Ltd. using knit high-sensitivity conditions for the test conditions. The KOSHI value (as the value decreases, softness improves) was determined by carrying out a calculation by a formula using the results of the tests as parameters under knit underwear (summer) conditions.
(2) Determination of Peel Strength
   Test specimens 5 cm in width were cut from the nonwoven laminate obtained. Peel strength was measured by peeling the end of the test specimen, getting it gripped in the chucks, and peeling the test specimen by use of a tensile strength testing machine. As the testing conditions, the distance between the chucks was set at 20 mm, and the rate of pulling was set at 100 mm/minute. The average of the measurements of 5 test specimens was taken as peel strength.
(3) Determination of MFR
   The MFR of propylene homopolymer and propylene-ethylene random copolymer was measured at a load of 2.16 kg and a temperature of 230°C in accordance with ASTM D1238. The MFR of ethylene homopolymer was measured at a load of 2.16 kg and a temperature of 190°C in accordance with ASTM D1238.

### Experiment Example 1:

A concentric core-sheath type conjugate fiber having the core made of propylene-ethylene random copolymer and the sheath made of ethylene homopolymer (the ratio by weight between core and sheath was 20:80) was melt-spun by using propylene-ethylene random copolymer having the ethylene content of 0.5 mol%, the Mw/Mn of 3.0 and the MFR of 65 g/10 minutes and ethylene homopolymer having the density of 0.948 g/cm³, the Mw/Mn of 3.0 and the MFR of 30 g/10 minutes, and a spunbonded nonwoven fabric (S-1) having the basis weight of 23 g/m² and the component fiber having a fineness of 2 d(denier) was produced by depositing the conjugate fiber on the collection surface.

On the other-hand, a meltblown nonwoven fabric (M-1) which comprised a fiber having an average diameter of 3 µm and had the basis weight of 6 g/m² was produced by the meltblown method in which propylene-ethylene random copolymer having the ethylene content of 0.6 mol% and the MFR of 400 g/10 minutes was melted by use of an extruder and the melted material was blown from a spinneret having apertures having a diameter of 0.38 mm, while at the same time hot air was blown at the outlets of the apertures.

Next, the aforesaid spunbonded nonwoven fabric (S-1) and the meltblown nonwoven fabric (M-1) were put on top of each other, and these two layers of nonwoven fabrics were combined into one at a linear pressure of 60 kg/cm by use of a heat embossing roll heated to 120°C which had an impression area of 18%. As a result, a nonwoven fabric laminate was obtained. The KOSHI value and peel strength of the nonwoven fabric laminate thus obtained were measured. Results of the measurement are shown in Table 1.

### Experiment Example 2:

A meltblown nonwoven fabric (M-2) was produced by the same method as described in Experiment Example 1 except that propylene-ethylene random copolymer having the ethylene content of 4.0 mol% and the MFR of 400 g/10 minutes was used for the raw material resin for the meltblown nonwoven fabric.

Next, the spunbonded nonwoven fabric (S-1) produced as described in Experiment Example 1 and the aforesaid meltblown nonwoven fabric (M-2) were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 1.

### Experiment Example 3:

A meltblown nonwoven fabric (M-3) was produced by the same method as described in Experiment Example 1 except that propylene-ethylene random copolymer having the ethylene content of 4.8 mol% and the MFR of 400 g/10 minutes was used for the raw material resin for the meltblown nonwoven fabric.

Next, the spunbonded nonwoven fabric (S-1) produced as described in Experiment Example 1 and the aforesaid meltblown nonwoven fabric (M-3) were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 1.

### Experiment Example 4:

A meltblown nonwoven fabric (M-4) was produced by the same method as described in Experiment Example 1 except that propylene homopolymer having the MFR of 700 g/10 minutes was used for the raw material resin for the meltblown nonwoven fabric.

Next, the spunbonded nonwoven fabric (S-1) produced as described in Experiment Example 1 and the aforesaid meltblown nonwoven fabric (M-4) were put on top of each other, and a nonwoven fabric laminate was obtained by use of the heat embossing roll in the same manner as described in Experiment Example 1. The nonwoven fabric laminate thus obtained delaminated due to inadequate adhesion.

### Experiment Example 5:

A raw material blend was prepared by dry-blending ethylene homopolymer having the density of 0.950 g/cm³, the Mw/Mn of 3.3 and the MFR of 30 g/10 minutes and propylene homopolymer having the Mw/Mn of 2.8 and the MFR of 800 g/10 minutes at a ratio by weight of 2/98. A meltblown nonwoven fabric (M-5) which comprised a fiber having an average diameter of 3 µm and had the basis weight of 6 g/m² was produced by the meltblown method in which the melted raw material blend was blown from a spinneret having apertures having a diameter of 0.38 mm, while at the same time hot air was blown at the outlets of the apertures.

Next, the spunbonded nonwoven fabric (S-1) produced as described in Experiment Example 1 and the aforesaid meltblown nonwoven fabric (M-5) were put on top of each other, and these two layers of nonwoven fabrics were combined into one by use of a heat embossing roll in the same manner as described in Experiment Example 1. As a result, a nonwoven fabric laminate was obtained. The KOSHI value and peel strength of the nonwoven fabric laminate thus obtained are shown in Table 1.

### Experiment Example 6:

A meltblown nonwoven fabric (M-6) was produced by the same method as described in Experiment Example 5 except that a raw material blend prepared by dry-blending the ethylene homopolymer and the propylene homopolymer at a ratio by weight of 50/50 was used for the raw material resin for the meltblown nonwoven fabric.

Next, the spunbonded nonwoven fabric (S-1) produced as described in Experiment Example 1 and the aforesaid meltblown nonwoven fabric (M-6) were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 1.

### Experiment Example 7:

A meltblown nonwoven fabric (M-7) which comprised a fiber having an average diameter of 5 µm and had the basis weight of 6 g/m² was produced by the meltblown method in which ethylene homopolymer having the density of 0.938 g/cm³, the Mw/Mn of 3.3 and the MFR of 50 g/10 minutes was melted by use of an extruder and blown from a spinneret having apertures having a diameter of 0.38 mm, while at the same time hot air was blown at the outlets of the apertures.

Next, the spunbonded nonwoven fabric (S-1) produced as described in Experiment Example 1 and the aforesaid meltblown nonwoven fabric (M-7) were put on top of each other, and these two layers of nonwoven fabrics were combined into one by use of a heat embossing roll in the same manner as described in Experiment Example 1. As a result, a nonwoven fabric laminate was obtained. The KOSHI value and peel strength of the nonwoven fabric laminate thus obtained are shown in Table 1.

### Experiment Example 8:

A meltblown nonwoven fabric (M-8) which comprised a fiber having an average diameter of 3 µm and had the basis weight of 6 g/m² was produced by the meltblown method in which propylene homopolymer having the density of 0.91 g/cm³, the Mw/Mn of 3.0 and the MFR of 700 g/10 minutes was melted by use of an extruder and blown from a spinneret having apertures having a diameter of 0.38 mm, while at the same time hot air was blown at the outlets of apertures.

Next, the spunbonded nonwoven fabric (S-1) produced as described in Experiment Example 1 and the aforesaid meltblown nonwoven fabric (M-8) were put on top of each other, and these two layers of nonwoven fabrics were combined into one by use of a heat embossing roll in the same manner as described in Experiment Example 1. The nonwoven fabric laminate thus obtained delaminated due to inadequate adhesion.

### Experiment Example 9:

A concentric core-sheath type conjugate fiber having the core made of propylene-ethylene random copolymer and the sheath made of ethylene homopolymer (the ratio by weight between core and sheath was 20:80) was melt-spun by using propylene-ethylene random copolymer having the ethylene content of 0.5 mol%, the Mw/Mn of 3.0 and the MFR of 65 g/10 minutes and ethylene homopolymer having the density of 0.948 g/cm³, the Mw/Mn of 3.0 and the MFR of 20 g/10 minutes, and a spunbonded nonwoven fabric (S-2) having the basis weight of 23 g/m² and the component fiber having a fineness of 2 d was produced by depositing the conjugate fiber on the collection surface.

Next, the aforesaid spunbonded nonwoven fabric (S-2) and the meltblown nonwoven fabric (M-2) produced as described in Experiment Example 2 were put on top of each other, and these two layers of nonwoven fabrics were combined into one by use of a heat embossing roll in the same manner as described in Experiment Example 1. As a result, a nonwoven fabric laminate was obtained. The KOSHI value and peel strength of the nonwoven fabric laminate thus obtained are shown in Table 1.

### Experiment Example 10:

A spunbonded nonwoven fabric (S-3) was produced by the same method as described in Experiment Example 9 except that propylene-ethylene random copolymer having the ethylene content of 4.0 mol%, the Mw/Mn of 3.0 and the MFR of 65 g/10 minutes was used for the propylene-ethylene random copolymer (a).

Next, the aforesaid spunbonded nonwoven fabric (S-3) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 1.

### Experiment Example 11:

A spunbonded nonwoven fabric (S-4) was produced by the same method as described in Experiment Example 9 except that propylene-ethylene random copolymer having the ethylene content of 0.1 mol%, the Mw/Mn of 3.0 and the MFR of 65 g/10 minutes was used for the propylene-ethylene random copolymer (a).

Next, the aforesaid spunbonded nonwoven fabric (S-4) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 1.

### Experiment Example 12:

An attempt was made to produce a spunbonded nonwoven fabric by the same method as described in Experiment Example 9 except that propylene-ethylene random copolymer having the ethylene content of 5.5 mol%, the Mw/Mn of 3.0 and the MFR of 65 g/10 minutes was used for the propylene-ethylene random copolymer (a). However, the attempt failed due to poor spinnability.

### Experiment Example 13:

A concentric core-sheath type conjugate fiber having the core made of propylene-ethylene random copolymer and the sheath made of ethylene homopolymer (the ratio by weight between core and sheath was 5:95) was melt-spun by using propylene-ethylene random copolymer having the ethylene content of 0.5 mol%, the Mw/Mn of 3.0 and the MFR of 65 g/10 minutes and ethylene homopolymer having the density of 0.948 g/cm³, the Mw/Mn of 3.0 and the MFR of 20 g/10 minutes, and a spunbonded nonwoven fabric (S-5) having the basis weight of 23 g/m² and the component fiber having a fineness of 2 d was produced by depositing the conjugate fiber on the collection surface.

Next, the aforesaid spunbonded nonwoven fabric (S-5) and the meltblown nonwoven fabric (M-2) produced as described in Experiment Example 2 were put on top of each other, and these two layers of nonwoven fabrics were combined into one by use of a heat embossing roll in the same manner as described in Experiment Example 1. As a result, a nonwoven fabric laminate was obtained. The KOSHI value and peel strength of the nonwoven fabric laminate thus obtained are shown in Table 2.

### Experiment Example 14:

A spunbonded nonwoven fabric (S-6) was produced in the same manner as described in Experiment Example 13 except that the ratio by weight of the core and the sheath was set at 20:80.

Next, the aforesaid spunbonded nonwoven fabric (S-6) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 2.

### Experiment Example 15:

An attempt was made to produce a spunbonded nonwoven fabric by the same method as described in Experiment Example 13 except that the ratio by weight of the core and the sheath was set at 3:97. However, the attempt failed due to poor spinnability.

### Experiment Example 16:

A spunbonded nonwoven fabric (S-7) was produced by the same method as described in Experiment Example 13 except that the ratio by weight of the core and the sheath was set at 70:30.

Next, the aforesaid spunbonded nonwoven fabric (S-7) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 2.

### Experiment Example 17:

A spunbonded nonwoven fabric (S-8) was produced by the same method as described in Experiment Example 13 except that the ratio by weight of the core and the sheath was set at 80:20.

Next, the aforesaid spunbonded nonwoven fabric (S-8) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained were measured. Results of the measurement are shown in Table 2.

### Experiment Example 18:

A spunbonded nonwoven fabric (S-9) having the basis weight of 23 g/m² and the component fiber having a fineness of 2 d was produced by depositing a fiber obtained by melt-spinning only propylene-ethylene random copolymer having the ethylene content of 0.5 mol%, the Mw/Mn of 3.0 and the MFR of 65 g/10 minutes on the collection surface.

Next, the aforesaid spunbonded nonwoven fabric (S-9) and the meltblown nonwoven fabric (M-2) produced as described in Experiment Example 2 were put on top of each other, and these two layers of nonwoven fabrics were combined into one by use of a heat embossing roll in the same manner as described in Experiment Example 1. As a result, a nonwoven fabric laminate was obtained. The KOSHI value and peel strength of the nonwoven fabric laminate thus obtained are shown in Table 2.

### Experiment Example 19:

A concentric core-sheath type conjugate fiber having the core made of propylene-ethylene random copolymer and the sheath made of ethylene homopolymer (the ratio by weight between core and sheath was 20:80) was melt-spun by using propylene-ethylene random copolymer having the ethylene content of 0.5 mol%, the Mw/Mn of 3.0 and the MFR of 65 g/10 minutes and ethylene homopolymer having the density of 0.917 g/cm³, the Mw/Mn of 3.0 and the MFR of 20 g/10 minutes, and a spunbonded nonwoven fabric (S-10) having the basis weight of 23 g/m² and the component fiber having a fineness of 2 d was produced by depositing the conjugate fiber on the collection surface.

Next, the aforesaid spunbonded nonwoven fabric (S-10) and the meltblown nonwoven fabric (M-2) produced as described in Experiment Example 2 were put on top of each other, and these two layers of nonwoven fabrics were combined into one by use of a heat embossing roll in the same manner as described in Experiment Example 1. As a result, a nonwoven fabric laminate was obtained. The KOSHI value and peel strength of the nonwoven fabric laminate thus obtained are shown in Table 2.

### Experiment Example 20:

A spunbonded nonwoven fabric (S-11) was produced by the same method as described in Experiment Example 19 except that ethylene homopolymer having the density of 0.948 g/cm³, the Mw/Mn of 3.0 and the MFR of 20 g/10 minutes was used for the ethylene-based polymer (b).

Next, the aforesaid spunbonded nonwoven fabric (S-11) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 2.

### Experiment Example 21:

A spunbonded nonwoven fabric (S-12) was produced by the same method as described in Experiment Example 19 except that ethylene homopolymer having the density of 0.870 g/cm³, the Mw/Mn of 3.0 and the MFR of 20 g/10 minutes was used for the ethylene-based polymer (b) and that the fineness of the component fiber was set at 3.2 d.

Next, the aforesaid spunbonded nonwoven fabric (S-12) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 2.

### Experiment Example 22:

A spunbonded nonwoven fabric (S-13) was produced by the same method as described in Experiment Example 19 except that ethylene homopolymer having the density of 0.980 g/cm³, the Mw/Mn of 3.0 and the MFR of 20 g/10 minutes was used for the ethylene-based polymer (b) and that the fineness of the component fiber was set at 2.2 d.

Next, the aforesaid spunbonded nonwoven fabric (S-13) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 2.

### Experiment Example 23:

A concentric core-sheath type conjugate fiber having the core made of propylene-ethylene random copolymer and the sheath made of ethylene homopolymer (the ratio by weight between core and sheath was 10:90) was melt-spun by using propylene-ethylene random copolymer having the ethylene content of 0.5 mol%, the Mw/Mn of 2.0 and the MFR of 65 g/10 minutes and ethylene homopolymer having the density of 0.948 g/cm³, the Mw/Mn of 3.0 and the MFR of 30 g/10 minutes, and a spunbonded nonwoven fabric (S-14) having the basis weight of 23 g/m² and the component fiber having a fineness of 2 d was produced by depositing the conjugate fiber on the collection surface.

Next, the aforesaid spunbonded nonwoven fabric (S-14) and the meltblown nonwoven fabric (M-2) produced as described in Experiment Example 2 were put on top of each other, and these two layers of nonwoven fabrics were combined into one by use of a heat embossing roll in the same manner as described in Experiment Example 1. As a result, a nonwoven fabric laminate was obtained. The KOSHI value and peel strength of the nonwoven fabric laminate thus obtained are shown in Table 2.

### Experiment Example 24:

A spunbonded nonwoven fabric (S-15) was produced by the same method as described in Experiment Example 23 except that propylene-ethylene random copolymer having the ethylene content of 0.5 mol%, the Mw/Mn of 3.0 and the MFR of 65 g/10 minutes was used for the propylene-ethylene random copolymer (a).

Next, the aforesaid spunbonded nonwoven fabric (S-15) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 2.

### Experiment Example 25:

An attempt was made to produce spunbonded nonwoven fabric by the same method as described in Experiment Example 23 except that propylene-ethylene random copolymer having the ethylene content of 0.5 mol%, the Mw/Mn of 6.0 and the MFR of 65 g/10 minutes was used for the propylene-ethylene random copolymer (a). However, the attempt failed due to poor spinnability.

### Experiment Example 26:

A concentric core-sheath type conjugate fiber having the core made of propylene-ethylene random copolymer and the sheath made of ethylene homopolymer (the ratio by weight between core and sheath was 20:80) was melt-spun by using propylene-ethylene random copolymer having the ethylene content of 0.5 mol%, the Mw/Mn of 2.0 and the MFR of 65 g/10 minutes and ethylene homopolymer having the density of 0.948 g/cm³, the Mw/Mn of 1.5 and the MFR of 30 g/10 minutes, and a spunbonded nonwoven fabric (S-16) having the basis weight of 23 g/m² and the component fiber having a fineness of 2 d was produced by depositing the conjugate fiber on the collection surface.

Next, the aforesaid spunbonded nonwoven fabric (S-16) and the meltblown nonwoven fabric (M-2) produced as described in Experiment Example 2 were put on top of each other, and these two layers of nonwoven fabrics were combined into one by use of a heat embossing roll in the same manner as described in Experiment Example 1. As a result, a nonwoven fabric laminate was obtained. The KOSHI value and peel strength of the nonwoven fabric laminate thus obtained are shown in Table 3.

### Experiment Example 27:

A spunbonded nonwoven fabric (S-17) was produced by the same method as described in Experiment Example 26 except that ethylene homopolymer having the density of 0.948 g/cm³, the Mw/Mn of 2.5 and the MFR of 30 g/10 minutes was used for the ethylene-based polymer (b).

Next, the aforesaid spunbonded nonwoven fabric (S-17) and the meltblown nonwoven fabric (M-2) produced as described in Experiment Example 2 were put on top of each other, and a nonwoven fabric laminate was obtained by combining these nonwoven fabrics into one by use of the heat embossing roll in the same manner as described in Experiment Example 1. The KOSHI value and peel strength of the nonwoven fabric laminate thus obtained are shown in Table 3.

### Experiment Example 28:

An attempt was made to produce a spunbonded nonwoven fabric by the same method as described in Experiment Example 26 except that ethylene homopolymer having the density of 0.948 g/cm³, the Mw/Mn of 6.0 and the MFR of 30 g/10 minutes was used for the ethylene-based polymer (b). However, the attempt failed due to poor spinnability.

### Experiment Example 29:

An eccentric core-sheath type conjugate fiber having the core made of propylene-ethylene random copolymer and the sheath made of ethylene homopolymer (the ratio by weight between core and sheath was 20:80) was melt-spun by using propylene-ethylene random copolymer having the ethylene content of 0.5 mol%, the Mw/Mn of 3.0 and the MFR of 65 g/10 minutes and ethylene homopolymer having the density of 0.948 g/cm³, the Mw/Mn of 3.0 and the MFR of 30 g/10 minutes, and a spunbonded nonwoven fabric (S-18) having the basis weight of 7 g/m² and the component fiber having a fineness of 2 d was produced by depositing the conjugate fiber on the collection surface.

Next, a meltblown nonwoven fabric having the basis weight of 3 g/m² was produced by depositing a fiber having an average diameter of 3 µm on the aforesaid spunbonded nonwoven fabric (S-18) by the meltblown method in which propylene-ethylene random copolymer having the ethylene content of 4 mol% and the MFR of 400 g/10 minutes was melted by use of an extruder and blown from a spinneret having apertures having a diameter of 0.38 mm, while at the same time hot air at 260°C was blown at the outlets of the apertures.

Next, a spunbonded nonwoven fabric (S-18') similar to the aforesaid spunbonded nonwoven fabric (S-18) was laminated with the aforesaid meltblown nonwoven fabric, and the three layers were combined into one by use of a heat embossing roll under the same embossing conditions as described in Experiment Example 1. As a result, a nonwoven fabric laminate having the structure of spunbonded nonwoven fabric/meltblown nonwoven fabric/spunbonded nonwoven fabric was obtained. The KOSHI value and peel strength of the nonwoven fabric laminate thus obtained are shown in Table 3. Further, the peel strength between the meltblown nonwoven fabric and the spunbonded nonwoven fabric (S-18') was measured for the peel strength of the laminate.

### Experiment Example 30:

A nonwoven fabric laminate having the structure of spunbonded nonwoven fabric/meltblown nonwoven fabric/spunbonded nonwoven fabric was obtained by the same method as described in Experiment Example 29 except that the meltblown nonwoven fabric having the basis weight of 3 g/m² by using ethylene homopolymer having the density of 0.938 g/cm³, the Mw/Mn of 3.3 and the MFR of 50 g/10 minutes for the raw material resin of the meltblown nonwoven fabric and by depositing a fiber having an average diameter of 5 µm on the spunbonded nonwoven fabric (S-18) produced as described in Experiment Example 29. The KOSHI value and peel strength of the nonwoven fabric laminate thus obtained are shown in Table 3. Further, the peel strength between the meltblown nonwoven fabric and the spunbonded nonwoven fabric (S-18') was measured for the peel strength of the laminate.

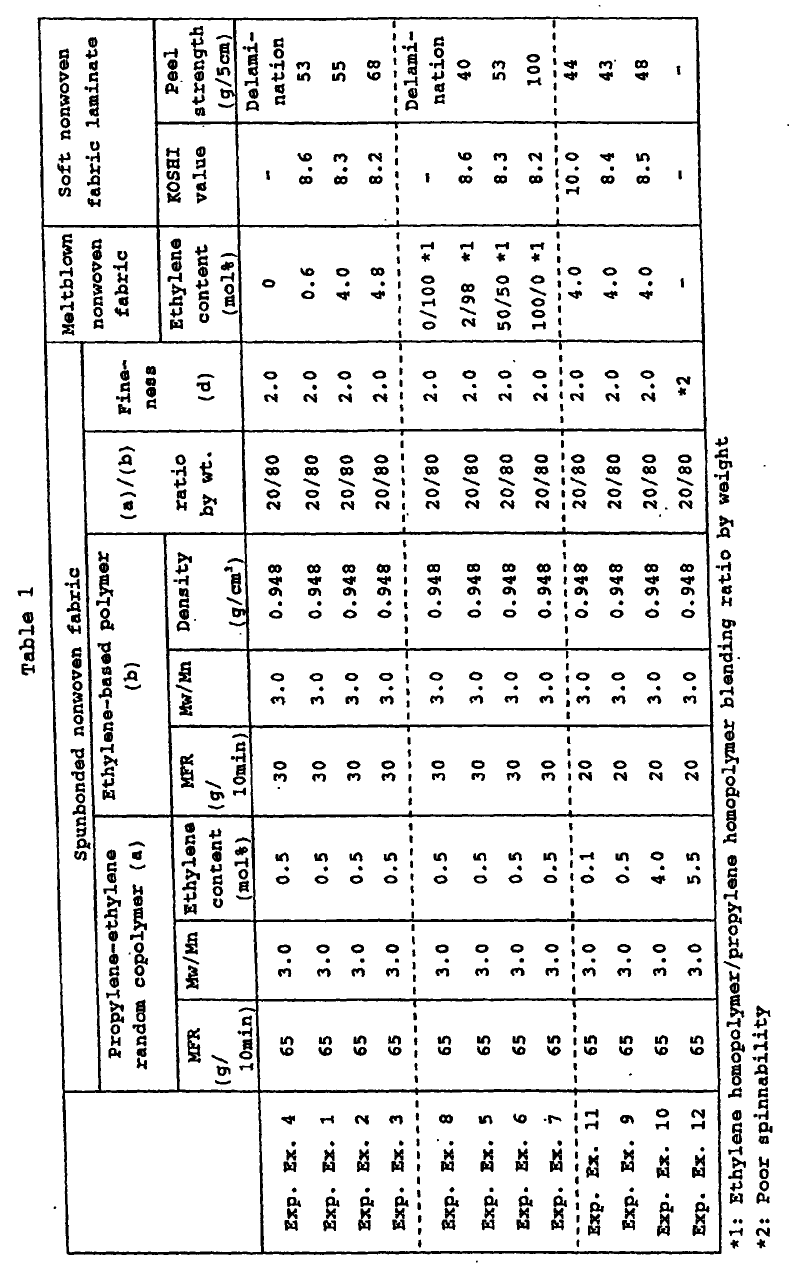

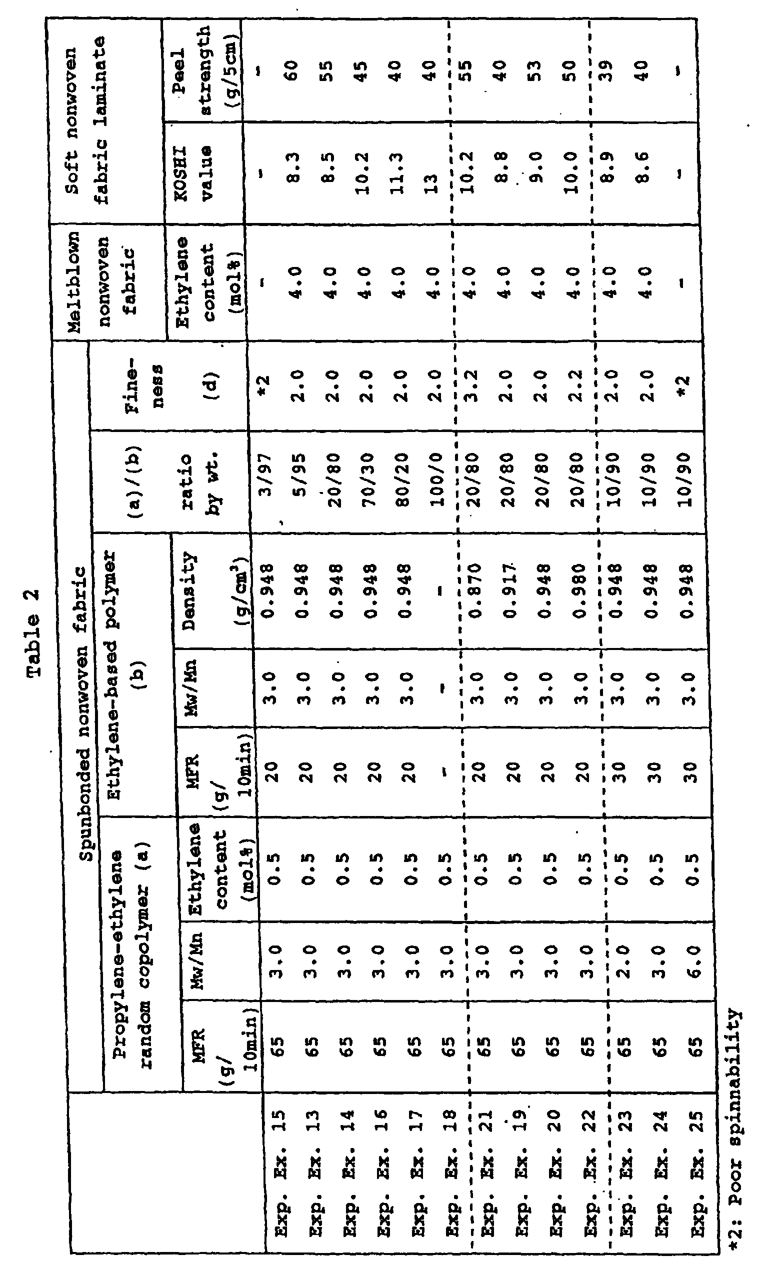

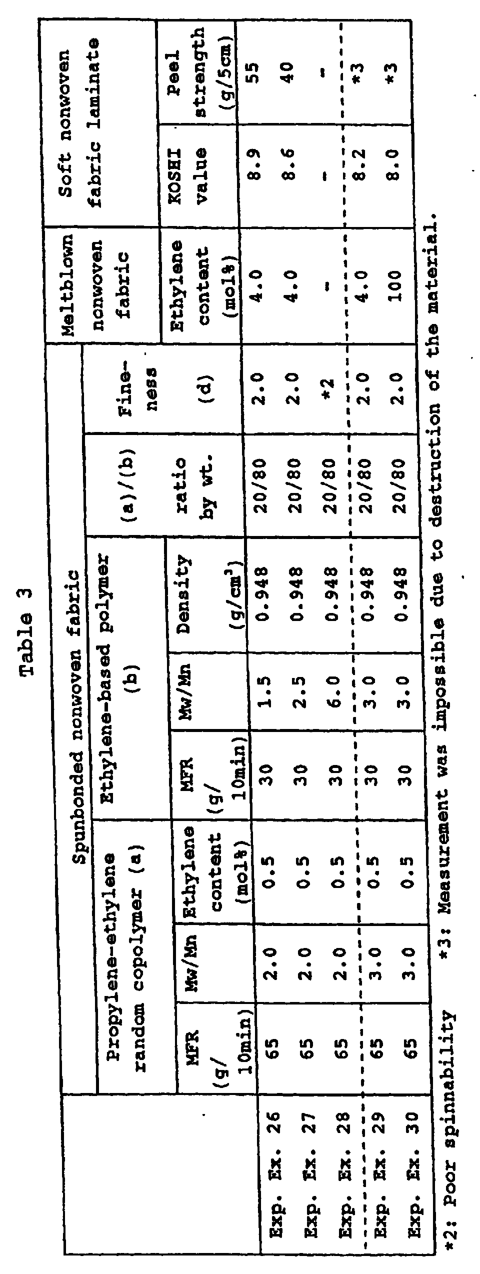

### POSSIBILITY OF INDUSTRIAL USE

The soft nonwoven fabric laminate of the present invention has good formation and excellent softness, gas permeability and water impermeability. The soft nonwoven fabric laminate of the present invention may be used suitably for a broad range of applications for which nonwoven fabrics have been used traditionally. It may be used suitably especially for applications including sanitary goods such as disposable diapers and sanitary napkins, substrates such as poultices and packaging materials.

## Claims

1. A soft nonwoven fabric laminate which comprises at least one spunbonded nonwoven fabric layer and at least one meltblown nonwoven fabric layer and one surface or both surfaces of which are a spunbonded nonwoven fabric-layer; with the aforesaid spunbonded nonwoven fabric comprising a conjugate fiber:
which comprises:
(A) A propylene-ethylene random copolymer (a) having the physical properties as described in (1) and (2) below:
(1) The ethylene content is not more than 5 mol%;
(2) Mw/Mn is 2 to 4;
(B) An ethylene-based polymer (b) having the physical properties as described in (3) and (4) below and forming at least part of the fiber surface:
(3) The density is 0.87 to 0.98 g/cm³;
(4) Mw/Mn is 1.5 to 4; and
in which the ratio by weight between (a) and (b) ((a)/(b)) is 5/95 to 70/30; and
with the aforesaid meltblown nonwoven fabric comprising one type of resin selected from among:
(i) An ethylene homopolymer;
(ii) A propylene-ethylene random copolymer whose ethylene content is in the range of 0.5 to 10 mol%;
(iii) A composition containing not less than 2 wt% but less than 100 wt% of an ethylene homopolymer and not more than 98 wt% of a propylene-based polymer.

2. A soft nonwoven fabric laminate as claimed in claim 1, wherein the ethylene content of the propylene-ethylene random copolymer (a) forming the conjugate fiber of the aforesaid spunbonded nonwoven fabric is in the range of 0.3 to 5 mol%.

3. A soft nonwoven fabric laminate as claimed in claim 1 or 2, wherein the conjugate fiber forming the aforesaid spunbonded nonwoven fabric is a concentric core-sheath type conjugate fiber made up of the core part comprising the propylene-ethylene random copolymer (a) and the sheath part comprising the ethylene-based polymer (b).

4. A soft nonwoven fabric laminate as claimed in claim 1 or 2, wherein the conjugate fiber forming the aforesaid spunbonded nonwoven fabric is an eccentric core-sheath type conjugate fiber made up of the core part comprising the propylene-ethylene random copolymer (a) and the sheath part comprising the ethylene-based polymer (b).

5. A soft nonwoven fabric laminate as claimed in claim 1 or 2, wherein the conjugate fiber forming the aforesaid spunbonded nonwoven fabric is a side-by-side type conjugate fiber made up of the propylene-ethylene random copolymer (a) and the ethylene-based polymer (b).

6. A soft nonwoven fabric laminate as claimed in any of claims 1 through 5, wherein the aforesaid spunbonded nonwoven fabric layer and the aforesaid meltblown nonwoven fabric layer are bonded by the processing of heat embossing.

7. A soft nonwoven fabric laminate as claimed in claims 6, wherein the bonded area of the spunbonded nonwoven fabric layer and the meltblown nonwoven fabric layer is 5% to 35% of the area of contact between the aforesaid spunbonded nonwoven fabric layer and the aforesaid meltblown nonwoven fabric layer.

8. A soft nonwoven fabric laminate as claimed in any of claims 1 through 7, wherein the KOSHI value is not more than 10.5.

9. A soft nonwoven fabric laminate as claimed in any of claims 1 through 8, wherein the peel strength between the aforesaid spunbonded nonwoven fabric layer and the aforesaid meltblown nonwoven fabric layer is not less than 15 g/5 cm.

10. A material for use in sanitary goods which comprises the soft nonwoven fabric laminate as claimed in claims 1 through 9.

11. A material for use in packaging materials which comprises the soft nonwoven fabric laminate as claimed in claims 1 through 9.
